# FASCICULE DE BREVET EUROPEEN

(11) **EP 0 539 249 B1**
(45) Date de publication et mention de la délivrance du brevet: **27.12.1995**
(21) Numéro de dépôt: 92402557.0
(22) Date de dépôt: 17.09.1992
(51) Int. Cl.: B60S 1/34

(54) **Dispositif d'essuie-glace comportant des moyens commandés pour faire varier l'effort d'essuyage**
Fahrzeug-Scheibenwischer, der Mittel aufweist, die gesteuert werden, um den Wischerdruck zu ändern
Vehicle windshield wiper with controlled means to vary the wiper pressure

(30) Priorité: 24.09.1991 FR 9111722
(43) Date de publication de la demande: 28.04.1993
(73) Titulaire: PAUL JOURNEE S.A., F-92707 Colombes Cédex (FR)
(72) Inventeur: Journée, Maurice, F-60240 Reilly (FR)
(74) Mandataire: Lemaire, Marc

(56) Documents cités:
- EP-A- 0 412 804
- DE-A- 3 743 669
- GB-A- 642 188
- PATENT ABSTRACTS OF JAPAN vol. 12, no. 113 (M-683)(2960) 9 Avril 1988 & JP-A-62 241 751 (NIPPON DENSO) 22 Octobre 1987

## Description

La présente invention est relative à un dispositif d'essuie-glace, notamment pour un véhicule automobile.

L'invention concerne plus particulièrement un dispositif d'essuie-glace du type comportant un bras d'essuie-glace qui porte au moins un balai d'essuyage, par exemple par l'intermédiaire d'un porte-balai et qui est monté articulé, autour d'un axe d'articulation, sur une tête d'entraînement de l'essuie-glace qui est soumise à un mouvement de rotation alternatif par un arbre d'essuyage qui permet d'obtenir un balayage de la vitre à essuyer.

Le bras d'essuie-glace porte, par l'intermédiaire du porte-balai un balai d'essuyage articulé qui est apte à essuyer la surface vitrée telle que par exemple un pare-brise de véhicule automobile.

Afin d'obtenir un essuyage correct de la surface vitrée, il est nécessaire que la lame d'essuyage de l'essuie-glace soit appliquée sur la surface vitrée à essuyer avec une force de pression, ou force d'essuyage, importante.

A cet effet, il est généralement prévu au moins un ressort, par exemple un ressort hélicoïdal de traction, qui est disposé entre la tête d'entraînement et le reste du bras d'essuie-glace qui applique en fait un couple nominal d'essuyage sensiblement constant au bras d'essuie-glace, autour de son axe d'articulation, de manière à venir plaquer la lame d'essuyage contre la vitre.

Du fait de la conception de ce dispositif, la lame est appuyée pendant le mouvement de balayage de la surface vitrée, mais également en position de repos du dispositif d'essuie-glace.

Du fait de la permanence de l'effort nominal d'essuyage qui est appliqué à la lame lorsque le dispositif d'essuie-glace est au repos, on constate que la lame conserve une forme résiduelle résultant de l'écrasement de son profil contre la surface vitrée et la lame ne procure plus alors un essuyage convenable de la surface vitrée.

Il est donc souhaitable de pouvoir réduire l'effort nominal d'essuyage appliqué à la lame lorsque l'essuie-glace est au repos.

Par ailleurs, la qualité d'essuyage de la surface vitrée dépend, en fonctionnement, de la maîtrise de l'effort d'essuyage qui est appliqué à la lame, et ceci notamment en fonction de la vitesse de déplacement du véhicule et en fonction de la fréquence du mouvement de balayage de l'essuie-glace.

Il est également connu d'augmenter la force d'essuyage au moyen d'appendices aérodynamiques montés sur le bras d'essuie-glace mais ces dispositifs ne permettent pas de maîtriser avec précision la valeur de la force d'essuyage et ne permettent notamment pas de la faire varier de manière contrôlée en fonction d'un paramètre de fonctionnement du véhicule.

Afin de remédier aux inconvénients qui viennent d'être mentionnés, l'invention propose un dispositif d'essuie-glace, notamment pour véhicule automobile, du type comportant un bras d'essuie-glace qui porte au moins un balai d'essuyage et qui est monté pivotant autour d'un axe d'articulation sur une tête d'entraînement du bras et des moyens agencés entre la tête d'entraînement et le bras d'essuie-glace pour appliquer à ce dernier un couple d'essuyage et qui comportent au moins un ressort qui applique au bras d'essuie-glace un couple nominal d'essuyage sensiblement constant, lesdits moyens comportant au moins un ressort complémentaire pour appliquer au bras d'essuie-glace une charge dont la valeur algébrique est réglable de manière à pouvoir augmenter la valeur du couple d'essuyage en fonction d'au moins un paramètre de fonctionnement du véhicule, et ledit au moins un ressort étant à l'état neutre lorsque la valeur du couple complémentaire est nulle suivant les enseignements des documents DE-A-37 43 669 et JP-A-194 138/82, dispositif d'essuie-glace caractérisé en ce que le ressort complémentaire permet d'appliquer au bras d'essuie-glace une charge dont la valeur algébrique est réglable de manière à pouvoir également réduire ladite valeur du couple d'essuyage en fonction dudit au moins paramètre.

Selon des modes de réalisation de l'invention :
- le ressort complémentaire est constitué de deux ressorts dont l'un au moins est un ressort de compression ;
- le ressort complémentaire présente une extrémité reliée à un actionneur associé à la tête d'entraînement ;
- le ressort complémentaire est constitué d'un ressort de traction et d'un ressort de compression agencés en parallèle ;
- les ressorts de compression et de traction sont agencés concentriquement ;
- il est prévu une première pièce d'accrochage reliée au bras d'essuie-glace et une seconde pièce d'accrochage reliée à la tige de sortie de l'actionneur, chacune des pièces d'accrochage comportant une coupelle d'appui pour l'extrémité correspondante du ressort de compression et un crochet central pour l'extrémité correspondante du ressort hélicoïdal de traction ;
- selon une variante, le ressort complémentaire est constitué de deux ressorts de compression agencés consécutivement sur une tige support dont une première extrémité est reliée au bras d'essuie-glace, une coupelle d'actionnement étant prévue qui est agencée entre les deux extrémités en regard des deux ressorts, qui est montée coulissante sur la tige et qui est reliée à l'actionneur ;
- la coupelle d'actionnement constitue le fond percé d'un fût cylindrique dont la jupe entoure l'un des deux ressorts de compression et est reliée à l'actionneur ; et
- l'actionneur comprend une tige de sortie munie d'une crémaillère associée à au moins un pignon entraîné en rotation par un moteur.

D'autres caractéristiques et avantages de l'invention apparaîtront à la lecture de la description détaillée qui va suivre pour la compréhension de laquelle on se reportera au dessin annexé qui illustre un mode de réalisation de l'invention donné à titre non limitatif et sur lequel :
- La figure 1 est une vue de dessus avec arrachement partiel d'un dispositif d'essuie-glace réalisé conformément aux enseignements de l'invention ;
- la figure 2 est une vue de détail en section selon la ligne 2-2 de la figure 1 ; et
- la figure 3 est une vue similaire à celle de la figure 1 représentant un second mode de réalisation du ressort complémentaire.

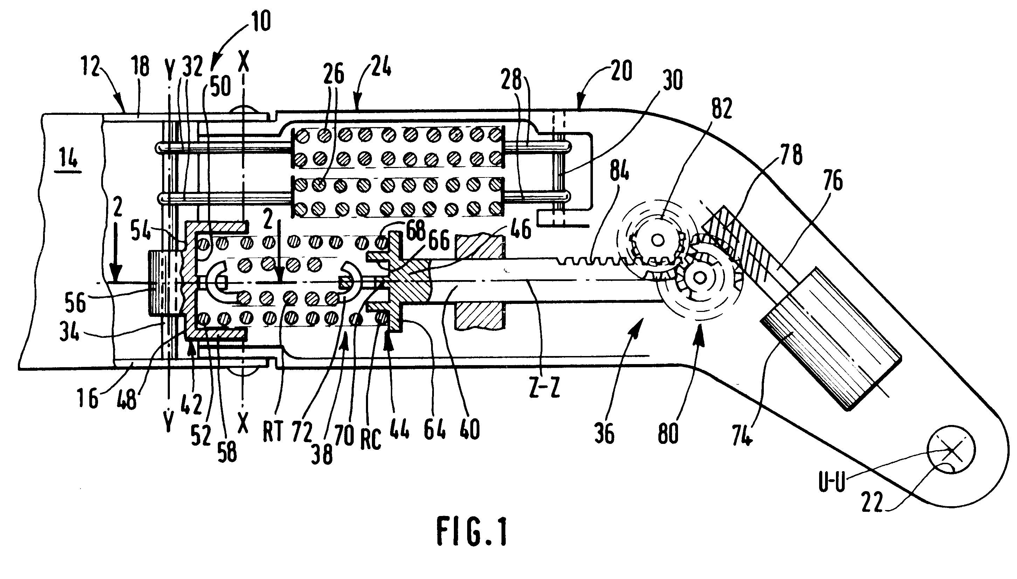

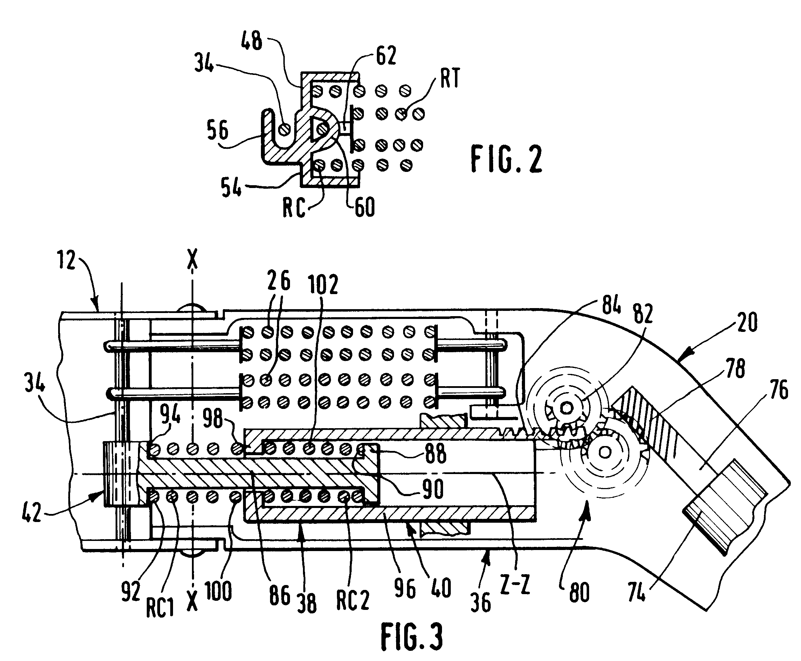

Le dispositif d'essuie-glace 10 illustré aux figures 1 et 2 comporte un bras d'essuie-glace 12 formant porte-balai dont la portion illustrée sur les figures se présente sous la forme d'un profilé creux en U inversé constitué par un dos 14 et par deux flancs ou joues latérales perpendiculaires 16 et 18.

Le bras d'essuie-glace 12 est articulé sur une tête d'entraînement 20 autour d'un axe géométrique X-X qui s'étend selon une direction sensiblement perpendiculaire à la direction générale du bras d'essuie-glace.

La tête d'entraînement 20 comporte, à son extrémité opposée à l'axe d'articulation X-X, un alésage 22 d'axe U-U perpendiculaire à l'axe X-X d'articulation qui est prévu pour recevoir un arbre d'essuyage (non représenté) qui permet d'entraîner en rotation la tête d'entraînement 20 en un mouvement alternatif par tout moyen tel qu'un moteur d'essuyage (non représenté).

Selon une technique connue, le dispositif d'essuie-glace 10 comporte des moyens 24 qui permettent d'appliquer au bras d'essuyage 12 un effort ou pression d'essuyage, de valeur sensiblement constante, et orienté en direction de la surface à essuyer (non représentée).

Le dispositif 24 est ici constitué de deux ressorts hélicoïdaux 26 de traction agencés en parallèle dont deux extrémités 28 sont accrochées sur une tige transversale 30 de la tête d'entraînement 20 et dont les deux extrémités opposées 32 sont accrochées sur une tige transversale 34 d'axe géométrique Y-Y parallèle à l'axe d'articulation X-X.

L'axe Y-Y est situé en-dessous de l'axe X-X, c'est-à-dire entre ce dernier et la surface à essuyer de manière que les ressorts 26 appliquent un couple nominal au balai 12 autour de son axe X-X dont il résulte une pression d'essuyage appliquée à la lame d'essuyage (non représentée).

Conformément à l'invention, le dispositif d'essuie-glace 10 comporte des moyens pour appliquer au bras d'essuie-glace 12 un couple complémentaire qui permet de faire varier la valeur de la pression d'essuyage.

Dans le mode de réalisation illustré aux figures 1 et 2, ces moyens complémentaires sont pour l'essentiel constitués par un actionneur 36 agencé dans la tête d'entraînement 20 et par un dispositif de liaison à ressorts 38 qui relie la tige de sortie coulissante 40 de l'actionneur 36 au bras d'essuie-glace 12.

Le dispositif à ressorts 38 est constitué d'un ressort de traction RT et d'un ressort de compression RC qui sont agencés en parallèle et montés concentriquement l'un dans l'autre. Les deux ressorts RT et RC s'étendent ainsi sensiblement selon la direction de coulissement Z-Z de la tige 40.

Le montage en parallèle des ressorts RT et RC est agencé entre l'extrémité libre 46 de la tige d'actionnement 40 et la tige 34 du bras d'essuie-glace 12 sur laquelle sont accrochées les extrémités 32 des ressorts 26.

Pour permettre d'appliquer aux ressorts RT et RC un effort de compression et/ou de traction, il est prévu une première pièce d'accrochage 42 et une seconde pièce d'accrochage 44.

La première pièce d'accrochage 42 se présente sous la forme d'une coupelle 48 contre le fond 50 de laquelle prend appui la première extrémité 52 du ressort de compression RC.

Le dos 54 de la coupelle d'appui 48 comporte un crochet 56 dans l'ouverture duquel est reçue la tige 34.

La coupelle d'appui 48 se prolonge axialement en direction du ressort RC par une jupe latérale cylindrique 58 qui permet de maintenir transversalement l'extrémité 52 du ressort RC.

En son centre, la coupelle d'appui 48 comporte un anneau 60 dans lequel est accrochée la première extrémité 62 du ressort de traction RT.

La seconde pièce d'accrochage 44 possède une structure équivalente à celle de la première pièce 42 et l'on retrouve une coupelle d'appui 64, une jupe cylindrique de centrage 66 pour la seconde extrémité 68 du ressort de compression RC ainsi qu'un anneau central 70 pour l'accrochage de la seconde extrémité 72 du ressort de traction RT.

L'actionneur 36 est constitué d'un moteur rotatif, par exemple électrique, 74 dont l'arbre de sortie 76 est taillé sous la forme d'un pignon hélicoïdal 78 qui transmet, par l'intermédiaire d'une cascade de pignons 80, son mouvement de rotation à un pignon de crémaillère 82 qui coopère avec une crémaillère 84 formée sur la tige 40 pour entraîner cette dernière en coulissement dans les deux sens selon la direction Z-Z.

Le dispositif est illustré à la figure 1 dans son état neutre correspondant à un couple complémentaire nul appliqué au bras d'essuie-glace 12 par le dispositif à ressorts 38.

Dans cet état, les ressorts RC et RT ne sont pas sollicités élastiquement.

Lorsque l'on désire augmenter le couple d'essuyage, et donc la pression d'essuyage, on provoque l'entraînement en rotation du moteur 74 dans le sens correspondant à un déplacement axial vers la droite de la tige 40 de manière à augmenter la charge appliquée au ressort de traction RT qui transmet cette charge élastique à la tige 34.

L'effort de traction appliqué par le ressort RT vient donc ainsi s'ajouter à celui appliqué par les ressorts hélicoïdaux 26 et augmenter le couple d'essuyage du dispositif d'essuie-glace.

Lorsque l'on désire réduire le couple d'essuyage appliqué au bras d'essuie-glace 12, il suffit de provoquer, à partir de la position illustrée à la figure 1, la rotation du moteur 74 dans le sens correspondant à un déplacement axial vers la gauche de la tige 40 de manière à appliquer au ressort de compression RC une charge supplémentaire qui est transmise à la tige d'accrochage 34 et qui tend à s'opposer à l'effort nominal qui lui est appliqué par les ressorts 26.

L'effort ainsi appliqué par le dispositif à ressorts 38 est retranché de l'effort appliqué par les ressorts 26 et il en résulte une réduction du couple nominal d'essuyage et donc de la pression d'essuyage.

On décrira maintenant la variante de réalisation illustrée à la figure 3 sur laquelle les organes et composants identiques ou équivalents à ceux de la figure 1 sont désignés par les mêmes chiffres de référence.

Le dispositif Q ressorts 38 est ici constitué par deux ressorts hélicoïdaux de compression RC1 et RC2 qui sont agencés consécutivement selon l'axe Z-Z.

A cet effet, la pièce d'accrochage 42 qui, comme dans le premier mode de réalisation, est accrochée sur la tige 34, se prolonge axialement vers la gauche en direction de l'actionneur, en considérant la figure 3, par une tige centrale 86 sur laquelle sont montés les deux ressorts de compression RC1 et RC2.

L'extrémité libre opposée de la tige 86 comporte un épaulement radial de plus grande dimension 88 contre laquelle prend appui la seconde extrémité axiale 90 du ressort de compression RC2.

De même, la première extrémité axiale 92 du ressort de compression RC1 prend appui contre une face radiale d'appui 94 de la pièce d'accrochage 42.

La tige 40 de l'actionneur 36 se présente sous la forme d'un fût cylindrique creux 96 qui entoure le second ressort de compression RC2 et la plaque radiale d'appui 88.

L'extrémité axiale de gauche, en considérant la figure 3, du fût 96 se prolonge par un fond radial percé 98 qui constitue la coupelle d'actionnement des deux ressorts de compression RC1 et RC2.

A cet effet, la seconde extrémité 100 du premier ressort RC1 et la première extrémité 102 du second ressort RC2 prennent appui respectivement contre les faces opposées de la coupelle d'actionnement 98.

A l'état neutre illustré à la figure 3, qui correspond à un couple complémentaire nul, les deux ressorts de compression RC1 et RC2 ne sont pas sollicités élastiquement.

Lorsque l'on désire augmenter le couple d'essuyage appliqué par le bras d'essuie-glace 12 sur la surface vitrée, il suffit de provoquer la rotation du moteur 42 dans le sens correspondant à un déplacement axial vers la droite de la tige coulissante 40.

En effet, ce déplacement se traduit par un déplacement correspondant de la coupelle d'actionnement 98 qui provoque une compression du ressort RC2 qui est transmise à la tige 86 par la face radiale d'appui 88 et ainsi à la pièce d'accrochage 42.

On vient ainsi ajouter un effort axial de traction sur la tige 34 à celui appliqué par les ressorts hélicoïdaux 26.

Inversement, lorsque l'on désire réduire le couple d'essuyage, il suffit de provoquer la rotation en sens inverse du moteur 42 dans le sens correspondant au déplacement axial vers la gauche, en considérant la figure 3, de la tige 40 de manière à appliquer au premier ressort de compression RC1 une charge de compression qui est transmise par la face 94 à la pièce d'accrochage 42 puis à la tige 34.

Cet effort tend à provoquer une rotation du bras d'essuie-glace 12 dans le sens opposé au couple nominal d'essuyage qui lui est appliqué par les ressorts hélicoïdaux 26.

Les moyens de commande de l'actionneur 36, sont par exemple des moyens de commande électronique qui ont pour fonction de faire varier le couple complémentaire en fonction d'au moins un paramètre de fonctionnement du véhicule;
La loi de commande appliquée à l'actionneur 36 a par exemple pour première fonction de réduire la valeur de l'effort d'essuyage lorsque l'essuie-glace est à l'arrêt, c'est-à-dire lorsque la lame d'essuyage est dans sa position de repos et qu'il n'y a pas de balayage de la surface vitrée.

Les moyens de commande peuvent également faire varier la valeur de la pression d'essuyage en cours de fonctionnement de l'essuie-glace, c'est-à-dire au cours du balayage de la surface vitrée.

A cet effet, la loi de commande peut par exemple prévoir que le couple complémentaire est nul pour un fonctionnement normal de l'essuie-glace, c'est-à-dire que la pression d'essuyage dépend alors du couple nominal résultant de l'action des ressorts 26 et des phénomènes aérodynamiques et de frottement.

La loi peut également prévoir d'accroître la valeur de l'effort d'essuyage en appliquant un couple complémentaire qui vient s'ajouter au couple nominal par exemple lorsque la vitesse du véhicule dépasse une pression déterminée.

La loi de commande de l'actionneur 36 n'est toutefois pas limitée à ces différents modes de fonctionnement.

Il est par exemple possible d'accroître la valeur de la pression d'essuyage, pour une vitesse relativement faible du véhicule mais dans une phase correspondant à un lavage de la surface vitrée.

De même, il est possible de faire varier la pression d'essuyage en fonction de la fréquence et/ou de la vitesse de balayage de l'essuie-glace.

L'invention n'est pas limitée au mode de réalisation qui vient d'être décrit.

Il est par exemple possible d'utiliser tous types d'actionneurs en lieu et place du moteur 42 et du dispositif à crémaillère.

De même, il est possible d'agir sur les ressorts 38, par un système à came permettant d'obtenir une loi de variation du couple complémentaire différente en fonction de la came adoptée.

La valeur du couple complémentaire appliquée au moyen de l'actionneur 36 peut être telle qu'elle aboutisse par exemple à annuler complètement la valeur du couple nominal.

Toutefois, dans les principales applications, la valeur absolue du couple complémentaire correspond à une proportion, par exemple de 25 %, du couple nominal appliqué par les ressorts 26.

On remarquera que l'utilisation de moyens complémentaires, c'est-à-dire indépendants des ressorts 26, a pour conséquence avantageuse de ne pas soumettre ces derniers à des variations importantes de leur tension et qu'ils peuvent donc être calculés et conçus pour une valeur sensiblement constante de l'effort de traction qu'ils appliquent et posséder ainsi une grande fiabilité.

Le fait d'appliquer un couple complémentaire ne correspondant qu'à une proportion du couple nominal permet également, en cas de panne de l'actionneur 36 dans l'une quelconque de ses positions, de conserver une pression d'essuyage permettant à l'essuie-glace de fonctionner.

## Revendications

1. Dispositif d'essuie-glace (10), notamment pour véhicule automobile, du type comportant un bras d'essuie-glace (12) qui porte au moins un balai d'essuyage et qui est monté pivotant autour d'un axe d'articulation (X-X) sur une tête d'entraînement (20) du bras (12), et des moyens (24, 36, 38) agencés entre la tête d'entraînement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant, lesdits moyens comportant au moins un ressort complémentaire (RC, RT, RC1, RC2) pour appliquer au bras d'essuie-glace (12) une charge dont la valeur algébrique est réglable de manière à pouvoir augmenter la valeur du couple d'essuyage en fonction d'au moins un paramètre de fonctionnement du véhicule et ledit au moins un ressort étant à l'état neutre lorsque la valeur du couple complémentaire est nulle, dispositif d'essuie-glace caractérisé en ce que le ressort complémentaire (RC, RT, RC1, RC2) permet d'appliquer au bras d'essuie-glace (112) une charge dont la valeur algébrique est réglable de manière à pouvoir également réduire ladite valeur du couple d'essuyage en fonction dudit au moins paramètre.

2. Dispositif d'essuyage selon la revendication 1, caractérisé en ce que le ressort complémentaire est constitué de deux ressorts (RC,RT ; RC1,RC2) dont l'un au moins est un ressort de compression (RC,RC1,RC2).

3. Dispositif d'essuie-glace selon la revendication 2, caractérisé en ce qu'au moins un ressort complémentaire (RC,RT,RC1,RC2) présente une extrémité reliée à un actionneur (36) associé à la tête d'entraînement (20).

4. Dispositif d'essuie-glace selon la revendication 2, caractérisé en ce que ledit ressort complémentaire est constitué d'un ressort de traction (RT) et d'un ressort de compression (RC) agencés en parallèle.

5. Dispositif d'essuie-glace selon la revendication 4, caractérisé en ce que lesdits ressorts de traction (RT) et de compression (RC) sont agencés concentriquement.

6. Dispositif d'essuie-glace selon la revendication 5, caractérisé en ce qu'il est prévu une première pièce d'accrochage (42) reliée au bras d'essuie-glace (12) et une seconde pièce d'accrochage (44) reliée à l'actionneur (36), chacune des pièces d'accrochage (42, 44) comportant une coupelle d'appui (48, 64) pour l'extrémité correspondante (52, 68) du ressort de compression et un crochet central (60, 70) pour l'extrémité correspondante (62, 72) du ressort de traction (RT).

7. Dispositif d'essuie-glace selon la revendication 2, caractérisé en ce que ledit ressort complémentaire est constitué de deux ressorts de compression (RC1, RC2) agencés consécutivement sur une tige support (86) dont une première extrémité est reliée au bras d'essuie-glace (12) et en ce qu'il est prévu une coupelle d'actionnement (98) agencée entre les deux extrémités en regard (100, 102) des deux ressorts de compression (RC1, RC2), montée coulissante sur la tige (86) et qui est reliée à l'actionneur (36).

8. Dispositif d'essuie-glace selon la revendication 7, caractérisé en ce que la coupelle (98) constitue le fond percé d'un fût cylindrique (96) dont la jupe entoure l'un des deux ressorts de compression (RC1,RC2) et est reliée à l'actionneur (36).

9. Dispositif d'essuie-glace selon l'une quelconque des revendications 2 à 8, caractérisé en ce que l'actionneur (36) comprend une tige de sortie (40) munie d'une crémaillère (84) associée à au moins un pignon (82) entraîné en rotation par un moteur (42).

## Claims

1. Screen wiper apparatus (10), especially for a motor vehicle, of the type comprising a wiper arm (12) which carries at least one wiper blade and which is mounted for pivoting movement about a pivot axis (X-X) on a drive head (20) of the am (12), with means (24, 36, 38) which are arranged between the drive head (20) and the wiper am (12) so as to apply a wiping torque to the latter and which comprise at least one spring (26) which applies a substantially constant nominal wiping torque to the wiper are (12), the said means comprising at least one complementary spring (RC, RT, RC1, RC2) for applying to the wiper am (12) a load the algebraic value of which is adjustable in such a way as to enable the value of the wiping torque to be increased as a function of at least one operating parameter of the vehicle, the said at least one spring being in the neutral state when the value of the complementary torque is zero, the screen wiper apparatus being characterised in that the complementary spring (RC, RT, RC1, RC2) permits the application to the screen wiper arm (112) of a load the algebraic value of which is adjustable in such a way as also to be able to reduce the said value of the wiping torque as a function of the said at least one parameter.

2. Screen wiper apparatus according to Claim 1, characterised in that the complementary spring comprises two springs (RC, RT; RC1, RC2), at least one of which is a compression spring (RC, RC1, RC2).

3. Screen wiper apparatus according to Claim 2, characterised in that at least one complementary spring (RC, RT, RC1, RC2) has one end coupled to an actuator (36) which is associated with the drive head (20).

4. Screen wiper apparatus according to Claim 2, characterised in that the said complementary spring comprises a tension spring (RT) and a compression spring (RC) arranged in parallel.

5. Screen wiper apparatus according to Claim 4, characterised in that the said tension spring (RT) and compression spring (RC) are arranged concentrically with each other.

6. Screen wiper apparatus according to Claim 5, characterised in that a first coupling member (42) coupled to the wiper arm (12), and a second coupling member (44) coupled to the actuator (36), are provided, each of the coupling members (42, 44) comprising a thrust plate element (48, 64) for engagement with the corresponding end (52, 68) of the compression spring, together with a central hook (60, 70) for engagement with the corresponding end (62, 72) of the tension spring (RT).

7. Screen wiper apparatus according to Claim 2, characterised in that the said complementary spring comprises two compression springs (RC1, RC2) which are arranged consecutively on a support bar (86), a first end of which is connected to the wiper arm (12), and in that an actuating thrust plate element (98) is provided, which is arranged between the two mutually facing ends (100, 102) of the two compression springs (RC1, RC2), being mounted for sliding movement on the bar (86), and which is coupled to the actuator (36).

8. Screen wiper apparatus according to Claim 7, characterised in that the thrust plate element (98) constitutes the perforated base portion of a cylindrical barrel member (96), the skirt portion of which surrounds one of the two compression springs (RC1, RC2) and is coupled to the actuator (36).

9. Screen wiper apparatus according to any one of Claims 2 to 8, characterised in that the actuator (36) comprises an output bar (40) having a rack (84) associated with at least one pinion (82) which is driven in rotation by a motor (42).

## Patentansprüche

1. Scheibenwischvorrichtung (10), insbesondere für Kraftfahrzeuge, der Bauart mit einem Wischerarm (12), der wenigstens ein Wischerblatt, trägt das um eine Anlenkachse (X-X) auf einem Mitnehmerkopf (20) des Arms (12) schwenkbar montiert ist, und mit
Mitteln (24, 36, 38), die zwischen dem Mitnehmerkopf (20) und dem Wischerarm (12) vorgesehen sind, um auf den letzteren ein Drehmoment zum Wischen auszuüben, und die wenigstens eine Feder (26) umfassen, die auf den Wischerarm (12) ein Nenndrehmoment zum Wischen ausübt, das im wesentlichen konstant ist, wobei die Mittel wenigstens eine Ergänzungsfeder (RC, RT, RC1, RC2) aufweisen, um auf den Wischerarm (12) eine Belastung auszuüben, deren algebraischer Wert so steuerbar ist, daß der Wert des Drehmoments zum Wischen in Abhängigkeit von wenigstens einem Betriebsparameter des Fahrzeugs erhöht werden kann und die wenigstens eine Feder im entspannten Zustand ist, wenn der Wert des ergänzenden Drehmoments gleich Null ist, wobei die Scheibenwischvorrichtung
**dadurch gekennzeichnet** ist, daß die Ergänzungsfeder (RC, RT, RC1, RC2) es ermöglicht, auf den Wischerarm (12) eine Belastung auszuüben, deren algebraischer Wert so steuerbar ist, daß außerdem der Wert des Drehmoments zum Wischen in Abhängigkeit von den wenigstens einen Parameter verringert werden kann.

2. Scheibenwischvorrichtung nach Anspruch 1,
**dadurch gekennzeichnet**, daß die Ergänzungsfeder zwei Federn (RC, RT; RC1, RC2) umfaßt, von denen wenigstens eine eine Druckfeder (RC, RC1, RC2) ist.

3. Scheibenwischvorrichtung nach Anspruch 2,
**dadurch gekennzeichnet**, daß wenigstens eine Ergänzungsfeder (RC, RT, RC1, RC2) ein Ende hat, das an eine Antriebsvorrichtung (36) angeschlossen ist, die mit dem Mitnehmerkopf (20) verbunden ist.

4. Scheibenwischvorrichtung nach Anspruch 2,
**dadurch gekennzeichnet**, daß die Ergänzungsfeder eine Zugfeder (RT) und eine Druckfeder (RC) umfaßt, die parallel zueinander angebracht sind.

5. Scheibenwischvorrichtung nach Anspruch 4,
**dadurch gekennzeichnet**, daß die Zugfeder (RT) und die Druckfeder (RC) konzentrisch angebracht sind.

6. Scheibenwischvorrichtung nach Anspruch 5,
**dadurch gekennzeichnet**, daß ein erstes Teil zum Anhaken (42), das mit dem Scheibenwischerarm (12) verbunden ist und ein zweites Teil zum Anhaken (44) vorgesehen ist, das mit der Antriebsvorrichtung (36) verbunden ist, wobei jedes Teil zum Anhaken (42, 44) eine Anlageplatte (48, 64) für das entsprechende Ende (52, 68) der Druckfeder und einen zentralen Haken (60, 70) für das entsprechende Ende (62, 72) der Zugfeder (RT) aufweist.

7. Scheibenwischvorrichtung nach Anspruch 2,
**dadurch gekennzeichnet**, daß die Ergänzungsfeder zwei Druckfedern (RC1, RC2) umfaßt, die hintereinander auf einen Haltestift (86) angebracht sind, von dem ein Ende mit dem Wischerarm (12) verbunden ist und daß eine Antriebsplatte (98) vorgesehen ist, die zwischen den beiden Enden gegenüberstehend (100, 102) zu den Druckfedern (RC1, RC2) angebracht ist und verschiebbar auf dem Stift (86) montiert ist und mit der Antriebsvorrichtung (36) verbunden ist.

8. Scheibenwischvorrichtung nach Anspruch 7,
**dadurch gekennzeichnet**, daß die Platte (98) den Boden eines zylinderförmigen Schaftes (96) darstellt, dessen Mantel eine der beiden Druckfedern (RC1, RC2) umgibt und mit der Antriebsvorrichtung (36) verbunden ist.

9. Scheibenwischvorrichtung nach einem der Ansprüche 2 bis 8, **dadurch gekennzeichnet**, daß die Antriebsvorrichtung (36) einen Austrittsstift (40) umfaßt, der mit einer Zahnstange (84) versehen ist, die an wenigstens ein Ritzel (82), das von einem Motor in Rotation versetzt wird, angeschlossen ist.
